# FASCICULE DE BREVET EUROPEEN

(11) **EP 2 046 643 B1**
(45) Date de publication et mention de la délivrance du brevet: **09.06.2010**
(21) Numéro de dépôt: 07823621.3
(22) Date de dépôt: 20.07.2007
(51) Int. Cl.: B64D 15/12, B64D 15/20

(54) **DISPOSITIF DE DETECTION ET D'ELIMINATION DE LA PRESENCE D'UNE COUCHE DE GLACE OU D'UN LIQUIDE**
VORRICHTUNG ZUR ERKENNUNG UND BESEITIGUNG VON EIS- ODER FLÜSSIGKEITSSCHICHTEN
DEVICE FOR DETECTING AND ELIMINATING THE PRESENCE OF A LAYER OF ICE OR LIQUID

(30) Priorité: 01.08.2006 FR 0653240
(43) Date de publication de la demande: 15.04.2009
(73) Titulaire: AIRBUS OPERATIONS (S.A.S), 31060 Toulouse (FR)
(72) Inventeur: DE SMET, Marie-Anne, 32600 Monbrun (FR)
(74) Mandataire: Schmit, Christian Norbert Marie
(86) Numéro de dépôt international: PCT/FR2007/051703
(87) Numéro de publication internationale: WO 2008/015356

(56) Documents cités:
- EP-A- 0 742 145
- US-A- 4 766 369
- US-A- 5 134 380
- US-A- 5 191 791
- US-A- 5 874 672
- US-B1- 6 384 611

## Description

La présente invention concerne un dispositif de détection et d'élimination de la présence d'une couche de glace formée sur la surface externe d'une structure aéronautique ou la présence d'un liquide infiltré à l'intérieur d'une structure et/ou dans le matériau de la structure, cette présence pouvant être sur une surface étendue ou formée localement dans des zones de la structure.

La présence du givre, de la glace sur des éléments de structure les plus exposés et les plus critiques d'un aéronef, tels que les ailes, l'empennage et les stabilisateurs peuvent perturber le fonctionnement de l'aéronef. Essentiellement, lorsqu'il y a une accumulation, le poids de la glace ou de la neige s'ajoutant au poids de l'aéronef entraîne un alourdissement de l'aéronef, nécessitant ainsi une poussée plus importante lors de son décollement. En outre une très légère rugosité de surface, d'une épaisseur aussi minime que 0.4 mm causée par la présence de la glace ou de la neige modifie l'écoulement de l'air au niveau de la portance et des gouvernes de l'aéronef. La conséquence de cette rugosité est une diminution importante de la portance, une augmentation de la traînée et une manoeuvrabilité amoindrie, particulièrement durant les phases de décollage et de montée initiale de l'aéronef.

Une autre conséquence importante vient du fait que les couches de glace qui se détachent des ailes ou du fuselage durant le décollage ou la montée de l'aéronef peuvent être intégrées par aspiration dans les moteurs montés à l'arrière du fuselage, causant ainsi des dommages voire un arrêt des moteurs. Les couches de glace qui se détachent peuvent également causer des dommages attribués à l'impact contre des surfaces critiques telles que les stabilisateurs.

Il existe à ce jour des moyens de détection qui permettent de détecter la présence du givre ou de la glace en effectuant une inspection tactile ou à l'aide de systèmes spécialement conçus pour détecter la glace, comme les dispositifs de détection de glace de sol (GIDS). Mais ces moyens sont difficiles à mettre en oeuvre et inadaptés pour une structure d'aéronef.

En outre ces moyens de détection sont dissociés des moyens de dégivrages. Il existe actuellement des moyens de dégivrage ou d'enlèvement de glace lors d'opérations aériennes dans des conditions de givrage qui consistent à enlever le givre, la glace sur les surfaces critiques de l'aéronef avant le décollage. Pour ce faire, on a recours à des moyens physico-chimiques qui consistent à enduire la surface critique d'un produit afin de limiter et retarder la formation de givre ou à apporter un liquide suintant à travers la structure. Ces moyens nécessitent des installations particulières pour approvisionner ces moyens dans les aéroports. Le liquide antigivrage risque d'induire des problèmes de colmatage sur la structure. Ces moyens physico-chimiques nécessitent en outre que l'aéronef soit immobilisé au sol pour procéder au dégivrage des surfaces critiques. Ceci implique un temps relativement long avant le décollage de l'aéronef et la présence d'un opérateur qualifié, entraînant par conséquent un coût relativement élevé.

On connaît également des dispositifs de dégivrage adaptés lors du vol de l'avion, tel que le dispositif qui utilise un système pneumatique constitué par des tubes en matériaux souples encastrés dans les bords d'attaque dont le gonflement et le dégonflement alternés brisent le givre lorsqu'il s'est formé, ou les dégivreurs thermiques constitués par des conduites parcourues par de l'air chaud prélevé sur les moteurs. Tous ces moyens nécessitent un prélèvement d'air important entraînant une augmentation de la consommation de carburant, et pénalisant ainsi les performances du groupe turboréacteur. En outre un tel dispositif nécessite la présence d'une place suffisante pour loger les tuyauteries et les dispositifs de commandes associés.

L'état de l'art est également illustré par le document EP-A-0 742 145 qui divulgue un système capacitif de détection de glace agencé sur une couche pneumatique de dégivrage. En outre, le document US-A-5 191 791 propose de combiner des systèmes capacitifs de détection de glace avec des système thermoélectriques de dégivrage.

Il n'existe cependant pas à ce jour un même système qui puisse être utilisé à la fois comme moyen de détection de la présence d'une couche de glace et comme moyen de dégivrage pour faire décoller la couche de glace en temps réel, en particulier pendant le vol de l'avion.

La présente invention vise à proposer un dispositif de détection et de dégivrage adapté qui permet de surveiller les zones critiques des structures à contrôler, qu'elles soient accessibles ou non, et de procéder au dégivrage lorsqu'il détecte une présence de couche de glace.

Le dispositif de la présente invention est adapté également pour éliminer la présence d'un liquide infiltré à l'intérieur d'une structure, et/ou parfois infiltré dans le matériau de la structure qui risque de détériorer la résistance mécanique de la structure. La présence de ce liquide est due principalement à des infiltrations accumulées au cours de l'utilisation de la structure, et non à une anomalie de la structure lors de son assemblage. Ce liquide peut être présent sur plusieurs centimètres à l'intérieur de la structure. Ce liquide peut être de l'eau, emmagasinée par l'effet de condensation, ou de l'huile hydraulique, par exemple de l'huile Skydroll qui est un liquide très corrosif pour les structures et sa présence, non souhaitable, peut être liée à des fuites au niveau des actionneurs.

Les problèmes à résoudre pour un tel dispositif sont :
- de disposer des moyens de détection et d'élimination adaptés pour être facilement apposés sur la surface des structures à contrôler qu'elles soient accessibles ou non ou à l'intérieur des structures tout en restant de masse et d'encombrement négligeable et en ne nécessitant qu'une faible puissance électrique pour leur fonctionnement,
- de disposer des moyens qui permettent une gestion automatique afin de réduire au maximum le travail de l'opérateur et du pilote pour réduire le coût de maintenance.

A cet effet, la présente invention présente un dispositif de détection et d'élimination d'une couche de glace formée sur la surface externe d'une structure d'aéronef ou d'un liquide infiltré à l'intérieur de la structure et/ou dans le matériau de la structure.

Selon l'invention, il comprend au moins une paire de sous-réseaux d'éléments conducteurs, chaque sous-réseau comportant au moins une série d'éléments conducteurs, lesdits sous-réseaux étant disposés de manière à ce que l'emboîtement entre les éléments conducteurs du premier sous-réseau et les deux éléments conducteurs du deuxième sous-réseau forme un réseau de capteurs capacitifs, lesdits éléments étant également des éléments chauffants résistifs pour constituer des moyens de dégivrage, lesdits éléments conducteurs étant noyés dans un matériau isolant, chaque sous-réseau d'éléments étant intégré dans un support souple, l'ensemble formant un revêtement souple.

Selon une forme de réalisation de l'invention, lesdits supports souples étant disposés perpendiculairement à la surface de la structure de sorte que le matériau isolant soit en contact direct avec la couche de glace ou proche de la structure.

Selon une autre forme de réalisation de l'invention, lesdits supports souples étant disposés dans un plan parallèle au plan de la surface de la structure, le support constituant la face externe dudit revêtement est partiellement poreux de manière à laisser pénétrer la glace ou le liquide dans le matériau isolant.

Pour éliminer la couche de glace, ledit revêtement est de préférence fixé sur une partie de ladite surface externe de la structure en épousant la forme de la structure.

Pour éliminer la présence du liquide, ledit revêtement est de préférence inséré à l'intérieur de la structure, fixé sur une surface interne de la structure ou incorporé dans le matériau constituant la structure.

Avantageusement la surface de la structure étant divisée en une succession de secteurs, le dispositif comporte un ensemble de réseaux de capteurs capacitifs assurant l'élimination de la glace ou du liquide pour chaque secteur.

Les dimensions et l'agencement des éléments conducteurs sont déterminés pour être aptes à détecter une variation de capacité induite par la présence de la glace ou du liquide pénétré dans ledit matériau isolant.

Selon l'invention, le dispositif comprend en outre une électronique d'interface implantée à la périphérie d'au moins un réseaux de capteurs capacitifs pour piloter lesdits éléments conducteurs, ladite électronique comprenant un circuit de commande pour assurer l'alimentation électronique desdits éléments conducteurs, et un microprocesseur.

Avantageusement, le microprocesseur comporte une mémoire contenant un tableau de valeurs de capacité de référence par couple d'éléments conducteurs, et des moyens d'analyse différentielle des valeurs de capacité mesurées par rapport aux valeurs de capacité du tableau de référence. Ledit tableau des valeurs de capacité de référence est prédéterminé par modélisation ou expérimentalement.

Selon l'invention, les moyens d'analyse différentielle comportent des moyens de génération d'un signal d'état S caractéristique du fait qu'une valeur moyenne différentielle résultant de la différence entre les valeurs de capacité de référence et les valeurs de capacité mesurées par les capteurs capacitifs dépasse une valeur seuil représentative de la présence d'une couche de glace ou la présence d'un liquide, ledit signal d'état S étant transmis par ledit microprocesseur vers ledit circuit de commande afin de déclencher l'envoi d'un courant à travers lesdits éléments conducteurs.

Selon l'invention, pour un aéronef comportant un tel dispositif décrit ci-dessus, le dispositif peut être relié à un tableau de bord situé dans le cabine de pilotage via un boîtier de communication pour l'affichage des paramètres de fonctionnement et pour la commande du dispositif.

D'autres caractéristiques et avantages de l'invention seront mieux compris à la lecture de la description qui va suivre en référence aux dessins suivants :
la figure 1.A et la figure 1.B représentant respectivement une vue de dessus en coupe partielle d'un réseau de capteurs capacitifs selon les deux modes de réalisation de l'invention ;
la figure 2 représentant schématiquement un exemple de configuration d'assemblage entre l'électronique d'interface et un ensemble de trois réseaux de capteurs capacitifs.

L'invention concerne un dispositif permettant de détecter et d'éliminer une couche de glace formée sur la surface externe d'une structure aéronautique, ou la présence d'un liquide à l'intérieur d'une structure et/ou infiltré dans le matériau de la structure, l'invention est particulièrement applicable aux structures aéronautiques de formes complexes et pendant la phase du vol de l'avion.

Dans le cadre de réalisation des moyens d'élimination en temps réel, le dispositif comporte des moyens adaptés pour prévoir et détecter la formation d'une couche de glace ou la présence d'un liquide et des moyens adaptés pour fonctionner comme dispositif d'élimination.

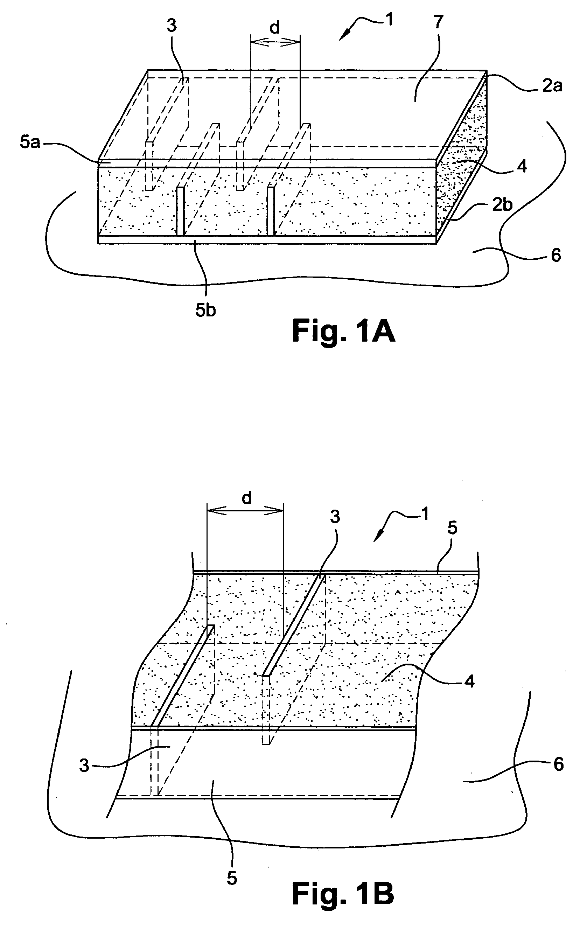

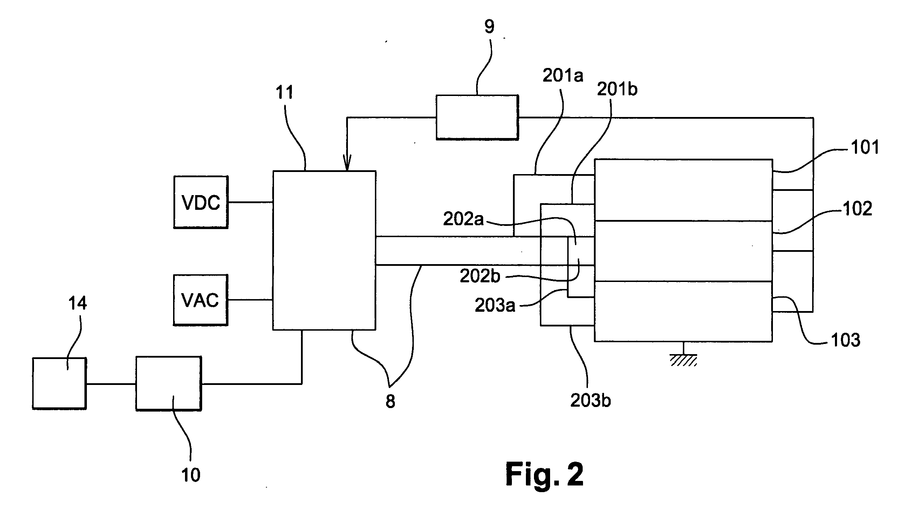

Un tel dispositif ainsi que son système de fonctionnement sont décrits sur les figures 1 et 2.

La figure 1.A représente un premier mode de réalisation de l'invention dans lequel le dispositif comporte deux sous-réseaux d'éléments conducteurs 2a, 2b.

Les deux sous-réseaux sont disposés en mettant en regard les éléments conducteurs 3 de sorte que l'emboîtement entre les éléments du premier réseau 2a et les éléments du deuxième réseau 2b forme un réseau de capteurs capacitifs.

Par exemple, chaque élément conducteur 3 du premier sous-réseau 2a est inséré entre deux éléments adjacents du deuxième sous-réseau 2b. Les deux sous-réseaux forment ainsi un réseau de capteurs capacitifs 1. L'ensemble des éléments conducteurs est noyé dans un matériau isolant 4.

Comme représenté sur la figure 1.A, les éléments conducteurs 3 sont intégrés respectivement dans un support souple supérieur 5a et un support souple inférieur 5b qui sont disposés dans un plan parallèle au plan de la surface de la structure 6. Le support supérieur 5a dont la face 7 est orientée vers l'extérieur est alors partiellement poreux de manière à laisser pénétrer la glace ou le liquide dans le matériau isolant 4. L'ensemble forme un revêtement souple.

La figure 1.B représente un deuxième mode de réalisation de l'invention dans lequel les supports souples 5 sont disposés dans un plan perpendiculaire par rapport au plan de la surface de la structure 6 de sorte que le matériau isolant 4 sandwiché entre les deux supports est directement en contact avec l'extérieur, en particulier il est en contact avec une éventuelle couche de glace ou d'un liquide et proche de la structure. En outre la face destinée à venir s'adhérer sur la surface de la structure comporte un film souple sur lequel est intégré le réseau de capteurs capacitifs, l'ensemble forme ainsi également un revêtement souple.

Pour éliminer la couche de glace, ledit revêtement est de préférence fixé sur une partie de ladite surface externe de la structure 6 en épousant la forme de la structure.

Pour éliminer la présence du liquide, ledit revêtement est inséré à l'intérieur de la structure, fixé sur une surface interne de la structure ou incorporé directement dans le matériau de la structure, par exemple lors de la phase de fabrication de la structure.

Dans les deux modes de réalisation, le support souple inférieur ou le film souple est rendu solidaire à la surface de la structure au moyen d'un matériau adhésif.

Comme le montrent la figure 1.A et la figure 1.B, le réseau de capteurs capacitifs constitue les moyens de détection de la présence d'une couche de glace ou du liquide.

En effet lorsque la glace ou le liquide pénètre dans le matériau isolant, leur présence induit une variation de la constante diélectrique ε du matériau dans lequel sont noyés les éléments conducteurs, cette variation diélectrique entraîne une variation de la capacité aux bornes des condensateurs formés par les éléments conducteurs. En comparant la moyenne des valeurs capacitives mesurées et la moyenne des valeurs capacitives de référence correspondant à des valeurs en absence de la couche de glace ou du liquide, la différence permet d'indiquer de manière quantitative la présence de la couche de glace ou du liquide. Une valeur seuil représentative de la présence effective d'une couche de glace ou de liquide est fixée.

Avantageusement, les dimensions et l'agencement des éléments conducteurs sont déterminés pour être aptes à détecter une variation de capacité induite par une variation de la constante diélectrique du matériau isolant. Chaque élément conducteur est espacé des éléments conducteurs adjacents d'une distance suffisante pour assurer une isolation électrique adaptée.

Les moyens de dégivrage sont également constitués par les éléments conducteurs noyés dans le matériau isolant qui sont des éléments résistifs chauffants pouvant dissiper de la puissance électrique par effet Joule lorsque le dispositif fonctionne en mode de d'élimination.

Les éléments conducteurs sont réalisés dans un matériau résistif métallique, par exemple un alliage d'argent ou de cuivre. Le réseau d'éléments conducteurs est obtenu par lithographie optique à travers un masque, puis couplée par une étape de métallisation par plasma ou tout autre moyen de dépôt. La dimension des éléments conducteurs est de l'ordre de dizaine de microns.

Le matériau isolant dans lequel sont noyés les éléments conducteurs est réalisé de préférence dans un matériau de la famille des matériaux présentant un coefficient de permittivité élevé.

Pour commander et activer le dispositif, il comprend en outre une électronique d'interface. De préférence cette électronique d'interface est également intégrée à la périphérie de chaque réseau de capteurs capacitifs. Cette interface comprend un circuit de commande 8 reliant les éléments conducteurs à un boîtier d'alimentation électrique et un microprocesseur 9 qui relie le réseau d'éléments conducteurs au boîtier 11. Chaque ligne ou chaque colonne d'éléments conducteurs est pilotée séparément par le circuit de commande de sorte qu'en cas de panne d'une ligne ou d'une colonne d'éléments conducteurs le réseau continue à fonctionner.

La figure 2 illustre schématiquement un exemple de circuit de commande d'un ensemble de trois réseaux de capteurs capacitifs couvrant par exemple une zone de la surface d'une structure. Le boîtier d'alimentation électrique est relié aux trois réseaux 101, 102, 103 respectivement via des fils d'entrée et de sortie de courants 201 a, 201 b, 202a, 202b, 203a, 203b, le boîtier lui-même étant relié à une source de tension continue ou une source de tension alternative. Le câblage de chaque réseau au boîtier est indépendant du câblage des réseaux adjacents de manière à minimiser les risques de panne du dispositif.

Avantageusement, on peut diviser la surface de la structure à dégivrer en une succession de secteurs à dégivrer, on dispose en réseau le dispositif sur la surface de la structure de manière à réaliser un tapis couvrant la surface concernée pour assurer l'élimination de glace ou du liquide pour chaque secteur. La densité du réseau dépend d'une part de la taille de la surface à couvrir et d'autre part du degré de risque de la zone concernée. Avantageusement cette configuration en réseaux permet de continuer d'assurer la fonction d'élimination et de dégivrage en cas de panne de l'un des dispositifs.

La figure 2 représente à titre illustratif un dispositif constitué de trois réseaux de capteurs disposés de manière à être contigus, ils peuvent être également disposés séparément à des intervalles réguliers ou aléatoires. L'ensemble forme un revêtement souple qui vient se fixer sur une zone de la surface critique. Lorsque la surface est étendue, plusieurs dispositifs sont alors disposés en réseau ou à des intervalles aléatoires dans une configuration optimale pour éliminer la couche de glace ou le liquide.

Le boîtier d'alimentation électrique 11 est relié à un tableau de bord 14 situé dans la cabine de pilotage via un boîtier de communication 10 pour l'affichage des paramètres de fonctionnement et pour la commande du dispositif.

Dans le cadre d'un dispositif de protection contre le givre ou le liquide en temps réel, le microprocesseur comporte une mémoire contenant un tableau de valeurs de capacité de référence par couple d'éléments conducteurs et des moyens d'analyse différentielle des valeurs de capacités mesurées par les capteurs capacitifs par rapport aux valeurs de capacité du tableau de référence. Le tableau de valeurs de capacité de référence est prédéterminé par modélisation ou expérimentalement.

Les moyens d'analyse différentielle comportent des moyens de génération d'un signal d'état S caractéristique du fait qu'une valeur moyenne différentielle résultant de la différence entre les valeurs de capacité de référence et les valeurs de capacité mesurées par les capteurs dépasse une valeur seuil représentative de la présence d'une couche de givre à la surface de la structure ou du liquide dans la structure. Le signal d'état S est transmis par le microprocesseur vers le boîtier d'alimentation afin de déclencher l'envoi d'un courant à travers les éléments conducteurs.

L'envoi du courant dans un ensemble de réseaux de capteurs capacitifs peut être un envoi séquentiel de manière à réaliser un chauffage séquentiel. Sur la figure 2, les trois réseaux 101, 102 et 103 sont chauffés l'un après l'autre. Cet envoi peut être également un envoi simultané dans les trois réseaux.

La puissance nécessaire à dissiper pour obtenir un dégivrage satisfaisant ou une évaporation du liquide est faible. En effet, en fonction de la valeur seuil, le dispositif de détection permet de prévenir relativement tôt la formation de glace ou du liquide, en outre, lors de la phase du dégivrage, la couche de glace est en contact direct avec le réseau d'éléments conducteurs. Le passage du courant dans les éléments conducteurs provoque la fonte de la glace en contact direct avec la surface du dispositif qui induit un décollement de la couche de glace. Aussi l'élévation de température nécessaire pour une fonte superficielle utilise une puissance relativement faible. Généralement le courant à envoyer dans les éléments conducteurs pour obtenir un dégivrage suffisant est compris entre 5 mA et 10 mA.

Avantageusement le dispositif de l'invention est associé à des moyens de mesure du taux d'humidité et de température de la peau de la structure de l'avion pendant le vol de l'avion. Ces moyens permettent de déclencher automatiquement le dispositif en mode de détection de glace en fonction des conditions de formation de glace.

Toutefois le dispositif de détection et d'élimination de glace ou du liquide peut être déclenché par le pilote manuellement dans le but d'un traitement préventif. Dans ce cas le dispositif est directement activé dans un mode de fonctionnement d'élimination, les éléments conducteurs sont alors alimentés en courant de manière continue.

Le dispositif de la présente invention associant une interface électronique aux réseaux de capteurs capacitifs permet d'activer la fonction d'élimination du dispositif uniquement en présence d'une couche de glace ou de liquide avec un temps de réponse optimal, permettant d'optimiser la consommation électrique du dispositif.

## Revendications

1. Dispositif de détection et d'élimination d'une couche de glace formée sur la surface externe d'une structure aéronautique (6) ou d'un liquide infiltré dans la structure et/ou dans le matériau constituant la structure, **caractérisé en ce qu'**il comprend au moins un paire de sous-réseaux d'éléments conducteurs (2a, 2b), chaque sous-réseau comportant au moins une série d'éléments conducteurs (3), lesdits sous-réseaux étant disposés de manière à ce que l'emboîtement entre les éléments conducteurs (3) du premier sous-réseau et les éléments conducteurs (3) du deuxième sous-réseau forme un réseau de capteurs capacitifs (1), lesdits éléments étant également des éléments chauffants résistifs pour constituer des moyens de dégivrage, lesdits éléments conducteurs étant noyés dans un matériau isolant (4), chaque sous-réseau d'éléments conducteurs étant intégré dans un support souple (5, 5a, 5b), l'ensemble formant un revêtement souple.

2. Dispositif selon la revendication 1, **caractérisé en ce que** lesdits supports souples (5) sont disposés perpendiculairement à la surface de la structure (6) de sorte que le matériau isolant (4) soit en contact direct avec la couche de glace et proche de la surface d'une structure.

3. Dispositif selon la revendication 1, **caractérisé en ce que** lesdits supports souples (5a, 5b) sont disposés dans un plan parallèle au plan de la surface de la structure (6), le support (5a) constituant la face externe (7) dudit revêtement étant partiellement poreux de manière à laisser pénétrer la glace ou le liquide dans le matériau isolant (4).

4. Dispositif selon les revendications 1 à 3, **caractérisé en ce que** ledit revêtement est fixé sur une partie de ladite surface de la structure (6) en épousant la forme de la structure.

5. Dispositif selon les revendications 1 à 3, **caractérisé en ce que** ledit revêtement est inséré à l'intérieur de la structure, fixé sur une surface interne de la structure ou incorporé dans le matériau constituant la structure.

6. Dispositif selon l'une des revendications précédentes, **caractérisé en ce que** la surface de la structure étant divisée en une succession de secteurs de dégivrage, ledit dispositif comporte un ensemble de réseau de capteurs capacitifs assurant l'élimination de la glace ou du liquide pour chaque secteur.

7. Dispositif selon l'une des revendications précédentes, **caractérisé en ce que** les dimensions et l'agencement des éléments conducteurs (3) sont déterminés pour être aptes à détecter une variation de capacité induite par la présence de la glace ou du liquide pénétré dans le matériau isolant.

8. Dispositif selon l'une des revendications précédentes, **caractérisé en ce que** ledit dispositif comprend en outre une électronique d'interface implantée à la périphérie d'au moins un réseau de capteurs capacitifs pour piloter lesdits éléments conducteurs, ladite électronique comprenant au moins un circuit de commande (8) pour assurer l'alimentation électrique desdits éléments conducteurs, et un microprocesseur (9).

9. Dispositif selon la revendication 8, **caractérisé en ce que** le microprocesseur (9) comporte une mémoire contenant un tableau de valeurs de capacité de référence par couple d'éléments conducteurs, et des moyens d'analyse différentielle des valeurs de capacité mesurées par rapport aux valeurs de capacité du tableau de référence.

10. Dispositif selon la revendication 9, **caractérisé en ce que** les moyens d'analyse différentielle comportent des moyens de génération d'un signal d'état S caractéristique du fait qu'une valeur moyenne différentielle résultant de la différence entre les valeurs de capacité de référence et les valeurs de capacité mesurées aux bornes des capteurs capacitifs dépasse une valeur seuil représentative de la présence d'une couche de glace à la surface de ladite structure ou d'un liquide dans la structure et/ou dans le matériau de la structure, ledit signal d'état S étant transmis par ledit microprocesseur (9) vers ledit circuit de commande (8) afin de déclencher l'envoi d'un courant à travers lesdits éléments conducteurs.

11. Dispositif selon la revendication 10, **caractérisé en ce que** le courant envoyé dans lesdits éléments conducteurs est compris entre 5 mA et 10 mA.

12. Aéronef comprenant un dispositif de détection et d'élimination de la présence d'une couche de glace ou d'un liquide selon l'une des revendications précédentes, **caractérisé en ce que** ledit dispositif est relié à un tableau de bord (14) situé dans la cabine de pilotage via un boîtier de communication (10) pour l'affichage des paramètres de fonctionnement et pour la commande dudit dispositif.

## Claims

1. A device for detecting and eliminating a layer of ice formed on the external surface of an aeronautical structure (6) or of a liquid infiltrated in the structure and/or in the material forming the structure, **characterised in that** it comprises at least one pair of sub-networks of conductive elements (2a, 2b), each sub-network including at least one series of conductive elements (3), said sub-networks being disposed so that the nesting between the conductive elements (3) of the first sub-network and the conductive elements (3) of the second sub-network forms a network of capacitive sensors (1), said elements also being resistive heating elements in order to constitute defrosting means, said conductive elements being embedded in an insulating material (4), each sub-network of conductive elements being integrated in a flexible support (5, 5a, 5b), the whole forming a flexible covering.

2. A device according to claim 1, **characterised in that** said flexible supports (5) are disposed perpendicularly to the surface of the structure (6) so that the insulating material (4) is in direct contact with the layer of ice and close to the surface of a structure.

3. A device according to claim 1, **characterised in that** said flexible supports (5a, 5b) are disposed in a plane parallel to the plane of the surface of the structure (6), the support (5a) forming the external face (7) of said covering being partially porous so as to allow the ice or liquid to penetrate the insulating material (4).

4. A device according to claims 1 to 3, **characterised in that** said covering is fixed to a part of said surface of the structure (6) while adopting the shape of the structure.

5. A device according to claims 1 to 3, **characterised in that** said covering is inserted inside the structure, fixed to an internal surface of the structure or incorporated in the material forming the structure.

6. A device according to one of the preceding claims, **characterised in that,** the surface of the structure being divided into a succession of defrosting sectors, said device includes a set of networks of capacitive sensors assuring the elimination of the ice or liquid for each sector.

7. A device according to one of the preceding claims, **characterised in that** the dimensions and arrangement of the conductive elements (3) are determined so as to be able to detect a variation in capacitance caused by the presence of the ice or liquid that has penetrated the insulating material.

8. A device according to one of the preceding claims, **characterised in that** said device also includes interface electronics located at the periphery of at least one network of capacitive sensors in order to control said conductive elements, said electronics including at least one control circuit (8) for providing the electrical supply to said conductive elements, and a microprocessor (9).

9. A device according to claim 8, **characterised in that** the microprocessor (9) includes a memory containing a table of reference capacitance values per pair of conductive elements, and means for differential analysis of the capacitance values measured with respect to the capacitance values in the reference table.

10. A device according to claim 9, **characterised in that** the differential analysis means includes means for generating a state signal S characteristic of the fact that a differential mean value resulting from the difference between the reference capacitance values and the capacitance values measured at the terminals of the capacitive sensors exceeds a threshold value representing the presence of a layer of ice on the surface of said structure or of a liquid in the structure and/or in the material of the structure, said state signal S being transmitted by said microprocessor (9) to said control circuit (8) in order to trigger the sending of a current through said conductive elements.

11. A device according to claim 10, **characterised in that** the current sent into said conductive elements is between 5 mA and 10 mA.

12. A aircraft including a device for detecting and eliminating the presence of a layer of ice or a liquid according to one of the preceding claims, **characterised in that** said device is connected to an instrument panel (14) situated in the cockpit via a communication box (10) for displaying operating parameters and controlling said device.

## Patentansprüche

1. Vorrichtung zum Erfassen und Beseitigen einer auf einer äußeren Oberfläche einer Luftfahrzeugstruktur (6) gebildeten Eisschicht oder einer in die Struktur und/oder in das die Struktur bildende Material eingedrungenen Flüssigkeit, **dadurch gekennzeichnet, dass** sie wenigstens ein Paar Untergitter aus leitenden Elementen (2a, 2b) umfasst, wobei jedes Untergitter wenigstens eine Reihe leitender Elemente (3) enthält, wobei die Untergitter in der Weise angeordnet sind, dass der Raum zwischen den Leiterelementen (3) des ersten Untergitters und den Leiterelementen (3) des zweiten Untergitters ein Gitter aus kapazitiven Sensoren (1) bildet, wobei diese Elemente außerdem Widerstandheizelemente sind, um Enteisungsmittel zu bilden, wobei die Leiterelemente in ein Isoliermaterial (4) getaucht sind, wobei jedes Untergitter von Leiterelementen in einen biegsamen Träger (5, 5a, 5b) integriert ist, wobei die Gesamtheit eine biegsame Beschichtung bildet.

2. Vorrichtung nach Anspruch 1, **dadurch gekennzeichnet, dass** die biegsamen Träger (5) senkrecht zu der Oberfläche der Struktur (6) angeordnet sind, derart, dass das Isoliermaterial (4) direkt mit der Eisschicht in Kontakt ist und sich nahe bei der Oberfläche einer Struktur befindet.

3. Vorrichtung nach Anspruch 1, **dadurch gekennzeichnet, dass** die biegsamen Träger (5a, 5b) in einer Ebene parallel zu der Ebene der Oberfläche der Struktur (6) angeordnet sind, wobei der Träger (5a), der die äußere Fläche (7) der Beschichtung bildet, teilweise porös ist, derart, dass das Eis oder die Flüssigkeit in das Isoliermaterial (4) eindringen kann.

4. Vorrichtung nach den Ansprüchen 1 bis 3, **dadurch gekennzeichnet, dass** die Beschichtung an einem Teil der Oberfläche der Struktur (6) befestigt ist, indem sie sich an die Form der Struktur anschmiegt.

5. Vorrichtung nach den Ansprüchen 1 bis 3, **dadurch gekennzeichnet, dass** die Beschichtung in das Innere der Struktur eingesetzt ist, an einer inneren Oberfläche der Struktur befestigt ist oder in das die Struktur bildende Material eingearbeitet ist.

6. Vorrichtung nach einem der vorhergehenden Ansprüche, **dadurch gekennzeichnet, dass** die Oberfläche der Struktur in eine Folge von Enteisungssektoren unterteilt ist, wobei die Vorrichtung eine Gesamtheit von Gittern kapazitiver Sensoren umfasst, die die Beseitigung des Eises oder der Flüssigkeit für jeden Sektor sicherstellt.

7. Vorrichtung nach einem der vorhergehenden Ansprüche, **dadurch gekennzeichnet, dass** die Abmessungen und die Anordnung der Leiterelemente (3) so bestimmt sind, dass sie eine Veränderung einer Kapazität detektieren können, die durch das Vorhandensein von Eis oder von Flüssigkeit, die in das Isoliermaterial eingedrungen ist, eingeführt wird.

8. Vorrichtung nach einem der vorhergehenden Ansprüche, **dadurch gekennzeichnet, dass** die Vorrichtung außerdem eine Schnittstellenelektronik, die am Umfang wenigstens eines Gitters kapazitiver Sensoren implantiert ist, um die Leiterelemente zu steuern, wobei die Elektronik wenigstens eine Steuerschaltung (8), um die elektrische Versorgung der Leiterelemente zu gewährleisten, und einen Mikroprozessor (9) umfasst.

9. Vorrichtung nach Anspruch 8, **dadurch gekennzeichnet, dass** der Mikroprozessor (9) einen Speicher, der eine Tabelle von Referenzkapazitätswerten pro Leiterelementpaar enthält, und Mittel zur differentiellen Analyse der gemessenen Kapazitätswerte in Bezug auf die Referenzkapazitätswerte der Tabelle umfasst.

10. Vorrichtung nach Anspruch 9, **dadurch gekennzeichnet, dass** die Mittel zur differentiellen Analyse Mittel zur Erzeugung eines Zustandssignals S umfassen, das dafür charakteristisch ist, dass ein differentieller Mittelwert, der sich aus der Differenz zwischen den Referenzkapazitätswerten und den an den Anschlüssen der kapazitiven Sensoren gemessenen Kapazitätswerten ergibt, einen Schwellenwert übersteigt, der das Vorhandensein einer Eisschicht auf der Oberfläche der Struktur oder einer Flüssigkeit in der Struktur und/oder in dem Material der Struktur repräsentiert, wobei das Zustandssignal S von dem Mikroprozessor (9) zu der Steuerschaltung (8) gesendet wird, um zu veranlassen, dass durch die Leiterelemente ein Strom geschickt wird.

11. Vorrichtung nach Anspruch 10, **dadurch gekennzeichnet, dass** der in die Leiterelemente geschickte Strom im Bereich von 5 mA bis 10 mA liegt.

12. Luftfahrzeug, das eine Vorrichtung zum Erfassen des Vorhandenseins und Entfernen einer Eisschicht oder einer Flüssigkeit nach einem der vorhergehenden Ansprüche enthält, **dadurch gekennzeichnet, dass** die Vorrichtung über ein Kommunikationsgerät (10) mit einem Instrumentenbrett (14), das sich in der Pilotenkabine befindet, verbunden ist, um Betriebsparameter anzuzeigen und um die Vorrichtung zu steuern.
